(19) Europäisches Patentamt
European Patent Office
Office européen des brevets

(11) **EP 4 503 279 A1**

(12) **EUROPEAN PATENT APPLICATION**
published in accordance with Art. 153(4) EPC

(43) Date of publication:
05.02.2025 Bulletin 2025/06

(21) Application number: 23778835.1

(22) Date of filing: 02.02.2023

(51) International Patent Classification (IPC):
*H01M 50/193* (2021.01)    *H01M 50/152* (2021.01)
*H01M 50/167* (2021.01)

(52) Cooperative Patent Classification (CPC):
H01M 50/152; H01M 50/167; H01M 50/193;
Y02E 60/10

(86) International application number:
PCT/JP2023/003334

(87) International publication number:
WO 2023/188799 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.03.2022 JP 2022051905

(71) Applicant: FDK Corporation
Tokyo 108-8212 (JP)

(72) Inventor: SHIBAOKA, Hiroyuki
Tokyo 108-8212 (JP)

(74) Representative: Dennemeyer & Associates S.A.
Postfach 70 04 25
81304 München (DE)

(54) **ALKALINE BATTERY, AND METHOD FOR MANUFACTURING GASKET FOR ALKALINE BATTERY**

(57) This nickel hydrogen secondary battery 2 comprises an outer can 10 having an opening on the upper edge thereof, an electrode group 22 accommodated together with an alkaline liquid electrolyte within the outer can 10, and a sealing body 11 secured by crimping to the opening portion of the outer can 10 with a gasket 12 interposed therebetween, the gasket 12 containing a polyamide resin having a weight-average molecular weight of 40,000 or greater.

FIG. 1

## Description

Technical Field

The present invention relates to an alkaline battery and a method for producing a gasket for an alkaline battery, and more particularly, to a method for producing a sealed alkaline battery and a gasket for an alkaline battery.

Background Art

A sealed nickel-hydrogen secondary battery is known as one type of alkaline battery. In this sealed nickel-hydrogen secondary battery, an electrode group, which includes a positive electrode and a negative electrode stacked with a separator in between, is accommodated in an outer can having an opening, along with an alkaline electrolyte. The opening of the outer can is hermetically closed by a sealing body via a gasket (see, for example, Patent Literature (hereinafter, referred to as PTL) 1).

The assembly procedure for a sealed nickel-hydrogen secondary battery is, for example, as follows. First, the electrode group is accommodated inside the outer can, and an alkaline electrolyte is injected into the outer can. In another step, a combination body in which an annular gasket is combined over the entire circumference of the peripheral edge of the sealing body is produced. Then, the combination body is fitted into the opening portion of the outer can, and the peripheral wall of the outer can is appropriately bent to crimp and fix the combination body. Thus, the above-described combination body is fixed to the opening portion of the outer can, thereby sealing the outer can. In the following, the crimping procedure is described in detail: first, the outer can is subjected to press working toward the radial inner side of the outer can at a predetermined position between the opening of the outer can at the peripheral wall thereof and the upper portion of the electrode group to bend the outer can, thereby reducing the diameter of the outer can. Thus, a constriction is formed in the outer can. By forming this constriction, an engaging protrusion portion (positioned above the electrode group) that protrudes into the interior of the outer can along the entire circumference of the peripheral wall of the outer can is formed. Then, the above-described combination body is placed on the engaging protrusion portion of the outer can. Subsequently, in the outer can, the peripheral wall of the opening portion above the engaging protrusion portion is bent inward in the radial direction of the outer can. Thus, the sealing body is crimped and fixed to the opening portion of the outer can via the gasket.

At this time, the peripheral edge portion of the sealing body is sandwiched between the engaging protrusion portion of the outer can and the bent peripheral wall of the opening portion of the outer can via the gasket. Thus, the outer can is sealed.

Citation List

Patent Literature

PTL 1
Japanese Patent Application Laid-Open No. H5-226001

Summary of Invention

Technical Problem

When the peripheral wall of the outer can is crimped to sandwich the peripheral edge portion of the sealing body via the gasket as described above, a crack may occur in the gasket, leading to poor sealing. In particular, when the gasket includes recycled resin, the gasket may be more prone to cracking. When such poor sealing occurs, the quality of the battery deteriorates, and the yield in battery production decreases.

Therefore, it is desired to obtain a battery with high sealing reliability to prevent a decrease in the yield during battery production.

The present invention has been made in view of the circumstances described above, and its objectives are to provide a high-quality alkaline battery by suppressing cracking of a gasket caused by crimping, and to provide a method for producing a gasket for an alkaline battery.

Solution to Problem

In order to achieve the above object, the present invention provides an alkaline battery including an outer can that includes an opening at an upper end thereof; an electrode group that is accommodated in the outer can together with an alkaline electrolyte; and a sealing body that is crimped and fixed to the opening of the outer can via a gasket, in which the gasket includes a polyamide resin having a weight average molecular weight of 40,000 or more.

The present invention also provides a method for producing a gasket for an alkaline battery, the method including: forming the gasket through recycling a gasket waste material that includes a polyamide resin having a weight average molecular weight of 40,000 or more.

Advantageous Effects of Invention

According to the present invention, it is possible to suppress cracking of a gasket to be caused by crimping, thereby providing a high-quality alkaline battery.

Brief Description of Drawings

FIG. 1 is a perspective view of a cylindrical nickel-hydrogen secondary battery partially cut away;

FIG. 2 is a cross-sectional view of a gasket;
FIG. 3 is a cross-sectional view illustrating a combination body of a sealing body and a gasket;
FIG. 4 is a cross-sectional view schematically illustrating a portion where the gasket is compressed;
FIG. 5 is a graph illustrating the relationship between the number of times of recycling of a gasket and the weight average molecular weight of the resin constituting the gasket; and
FIG. 6 is a graph illustrating the relationship between the weight average molecular weight of the resin that constitutes the gasket and the occurrence rate of cracks in the gasket.

Description of Embodiments

Hereinafter, a cylindrical nickel-hydrogen secondary battery (hereinafter also referred to as a battery) 2 of AAA size according to an embodiment will be described with reference to the accompanying drawings.

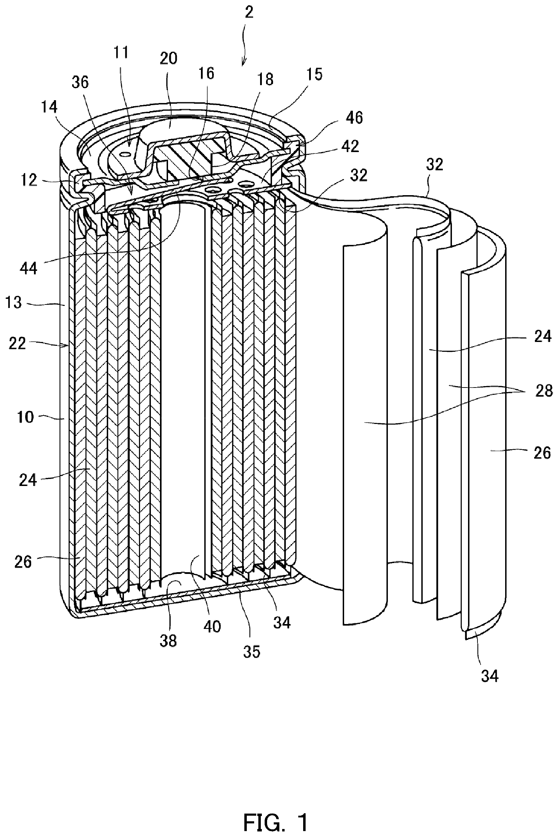

As illustrated in FIG. 1, battery 2 includes outer can 10 having cylindrical shape with an open upper end and a closed bottom. Outer can 10 is conductive, and its bottom wall 35 functions as a negative electrode terminal. Inside outer can 10, electrode group 22 is accommodated.

Electrode group 22 includes belt-shaped positive electrode 24, belt-shaped negative electrode 26, and belt-shaped separator 28. These components are wound in a spiral shape with separator 28 sandwiched between positive electrode 24 and negative electrode 26. That is, positive electrode 24 and negative electrode 26 are stacked on each other with separator 28 in between. Such electrode group 22 has a cylindrical shape as a whole. The outermost periphery of electrode group 22 is formed by a part (outermost peripheral portion) of negative electrode 26. That is, separator 28 is not located at the outermost periphery of electrode group 22, and negative electrode 26 is exposed. Therefore, negative electrode 26 at the outermost periphery of electrode group 22 comes into contact with the inner peripheral wall of outer can 10, thereby electrically connecting negative electrode 26 with outer can 10.

In electrode group 22, the end edge portion of positive electrode 24 protrudes in a spiral shape from one end surface, and the end edge portion of negative electrode 26 protrudes in a spiral shape from the other end surface. The protruding end edge portion of positive electrode 24 is referred to as positive electrode protruding end edge portion 32, and the protruding end edge portion of negative electrode 26 is referred to as negative electrode protruding end edge portion 34. Positive electrode current collector 36 is welded to positive electrode protruding end edge portion 32, thereby electrically connecting positive electrode current collector 36 to positive electrode 24 over a wide range. On the other hand, negative electrode protruding end edge portion 34 is welded with negative electrode current collector 38, and thus, negative electrode current collector 38 is electrically connected to negative electrode 26 over a wide range.

Further, a predetermined amount of alkaline electrolyte (not illustrated) is injected into outer can 10. This alkaline electrolyte facilitates the charge/discharge reaction between positive electrode 24 and negative electrode 26. Any electrolyte commonly used in nickel-hydrogen secondary batteries is used as the alkaline electrolyte. For example, it is preferable to use an aqueous solution of sodium hydroxide.

The material used for separator 28 is the same as that used in general nickel-hydrogen secondary batteries. For example, it is preferable to use a nonwoven fabric made of polyolefin fibers such as polyethylene or polypropylene.

Positive electrode 24 includes a conductive positive electrode base material having a porous structure with numerous voids, and a positive electrode mixture held within the voids and on the surface of the positive electrode base material.

As a positive electrode base material, for example, foamed nickel may be used.

The positive electrode mixture includes positive electrode active material particles, a conductive material, a positive electrode additive, and a binder. This binder functions to bind the positive electrode active material particles, the conductive material, and the positive electrode additive to each other, while simultaneously binding the positive electrode mixture to the positive electrode base material. As the binder, for example, carboxymethyl cellulose may be used.

The positive electrode active material particles are nickel hydroxide particles or higher order nickel hydroxide particles.

As the conductive material, for example, one or more types selected from cobalt compounds such as cobalt oxide (CoO), cobalt(II) hydroxide ($Co(OH)_2$), and cobalt (Co) may be used.

The positive electrode additive, which is appropriately selected as necessary, is added to improve the characteristics of the positive electrode. Typical primary positive electrode additives include, for example, yttrium oxide and zinc oxide.

Next, negative electrode 26 will be described.

Negative electrode 26 includes a conductive negative electrode core in the form of a belt, and a negative electrode mixture held by the negative electrode core.

The negative electrode core is made of a sheet-shaped metal material with distributed through-holes, and for example, a punched metal sheet may be used. The negative electrode mixture not only fills the through-holes of the negative electrode core but is also held in layers on both surfaces of the negative electrode core.

The negative electrode mixture includes particles of a hydrogen absorbing alloy, a negative electrode additive, a conductive material, and a binder. The hydrogen absorbing alloy is an alloy capable of absorbing and releasing hydrogen, which serves as the negative electrode active material. As the type of hydrogen absorbing alloy, a rare earth-Mg-Ni-based hydrogen absorbing alloy containing a rare earth element, Mg, and Ni is suitably used, although the type is not particularly limited. The binder described above serves to bind particles of the hydrogen absorbing alloy, the negative electrode additive, and the conductive material to each other, and further to bind the negative electrode mixture to the negative electrode core. Here, a hydrophilic or hydrophobic polymer may be used as the binder, and carbon black, graphite, nickel powder, or similar materials may be used as the conductive material.

The negative electrode additive, selected as appropriate to improve the characteristics of the negative electrode, is added as needed.

Positive electrode 24 and negative electrode 26, as described above, are wound in a spiral shape with separator 28 interposed between them, thereby forming electrode group 22. Specifically, during the winding process, positive electrode 24 and negative electrode 26 are disposed such that they are slightly offset from each other in a direction along the axial direction of electrode group 22. Separator 28 of a predetermined size is disposed at a predetermined position between positive electrode 24 and negative electrode 26, and the winding operation is carried out in this state. As a result, cylindrical-shaped electrode group 22 is obtained. The configuration of the obtained electrode group 22 is as follows: on one end side of electrode group 22, positive electrode protruding end edge portion 32 of positive electrode 24 is in a protruding state relative to negative electrode 26, which is adjacent to positive electrode 24 via separator 28; on the other end side of electrode group 22, negative electrode protruding end edge portion 34 of negative electrode 26 is in a protruding state relative to positive electrode 24, which is adjacent to negative electrode 26 via separator 28.

Electrode group 22, which includes positive electrode 24, negative electrode 26, and separator 28 described above, is wound using a winding core with a predetermined outer diameter dimension. After the winding operation, the winding core is removed, and thus central through-hole 40 that extends through the central portion of electrode group 22 is formed in the central portion.

In electrode group 22 described above, positive electrode current collector 36 is welded to positive electrode protruding end edge portion 32 positioned at one end portion of the cylindrical shape of electrode group 22.

Positive electrode current collector 36 described above includes, for example, main body portion 42 made of a thin metal plate with a circular shape in plan view, and lead portion 44 extending from a part of the peripheral edge of main body portion 42.

Main body portion 42 of prepared positive electrode current collector 36 is welded to positive electrode protruding end edge portion 32 on one end side of electrode group 22. Here, as the material for positive electrode current collector 36, although not particularly limited, a suitable example may be a Ni-plated steel plate obtained by applying a Ni plating with a thickness of 2 μm to a steel thin plate equivalent to cold rolled steel sheet (SPCC).

Further, negative electrode current collector 38 is welded to negative electrode protruding end edge portion 34 positioned at the other end portion of the cylindrical shape of electrode group 22.

For negative electrode current collector 38 described above, for example, a thin metal plate with a circular shape in plan view is used. Here, as the material for negative electrode current collector 38, although not particularly limited, a suitable example may be a Ni-plated steel plate obtained by applying a Ni plating with a thickness of 2 μm to a steel thin plate equivalent to cold rolled steel sheet (SPCC).

Electrode group 22, to which positive electrode current collector 36 and negative electrode current collector 38 are welded, is accommodated in outer can 10. Here, negative electrode current collector 38 is welded to bottom wall 35 of outer can 10, serving as a negative electrode terminal. Therefore, negative electrode 26 comes into contact with not only outer can 10 at the outermost peripheral portion of electrode group 22 but also bottom wall 35 of outer can 10 via negative electrode current collector 38. Therefore, negative electrode 26 comes into contact with outer can 10 over a wide range, thereby further increasing the current collection efficiency.

Alkaline electrolyte is injected into outer can 10, which accommodates electrode group 22. Outer can 10 (accommodating electrode group 22 along with the alkaline electrolyte) has an opening to which sealing body 11 is fixed via insulating gasket 12. The sealing body 11 includes lid plate 14, valve body 18, and cap member 20. Cap member 20 also serves as the positive electrode terminal.

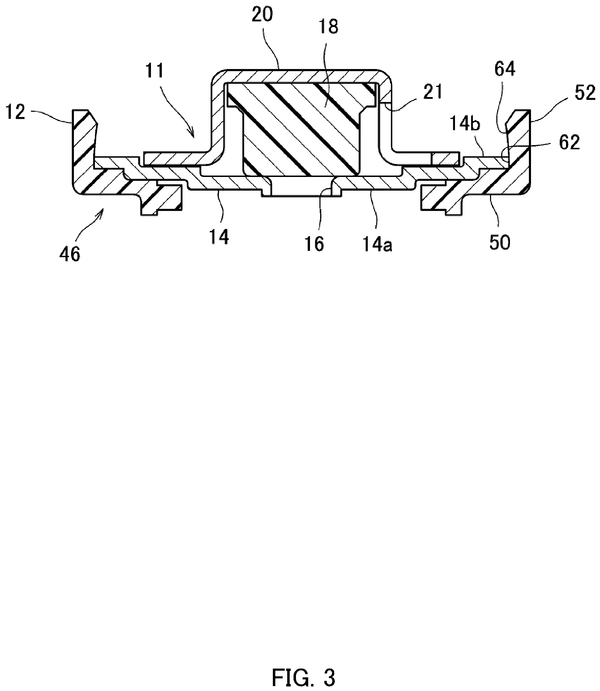

Lid plate 14 is a conductive disk-shaped member and includes inner surface 14a that is positioned inside battery 2 and outer surface 14b that is positioned outside the battery 2 on the opposite side to inner surface 14a (see FIG. 3). Further, lid plate 14 includes a through-hole that serves as a ventilation hole. In the present embodiment, central through-hole 16, serving as the ventilation hole, is formed in the center of lid plate 14. Further, rubber valve body 18 that closes central through-hole 16 is disposed on outer surface 14b of lid plate 14. Further, metal cap member (positive electrode terminal) 20 having a cylindrical shape with a flange covers valve body 18 and is electrically connected to outer surface 14b of lid plate 14. Cap member 20 presses valve body 18 against lid plate 14. Gas vent hole 21 is formed in cap member 20 (see FIG. 3).

In normal conditions, central through-hole 16 is hermetically closed by valve body 18. On the other hand, when gas is generated within outer can 10 and the internal pressure of outer can 10 increases, valve body 18 is compressed by the internal pressure, opening central through-hole 16. As a result, gas is released to the outside from the inside of outer can 10 via central through-hole 16 and gas vent hole 21 of positive electrode terminal 20. That is, central through-hole 16, valve body 18, and cap member (positive electrode terminal) 20 form a safety valve for battery 2.

Here, lead portion 44 of positive electrode current collector 36 is connected to inner surface 14a of lid plate 14. That is, positive electrode 24 and lid plate 14 are electrically connected to each other. Thus, positive electrode 24 and cap member (positive electrode terminal) 20 are electrically connected to each other via positive electrode current collector 36 and lid plate 14.

The opening of outer can 10 is sealed by sealing body 11 and gasket 12. Specifically, by crimping and fixing combination body 46 (in which sealing body 11 and gasket 12 are combined) to peripheral wall 13 of outer can 10 at a predetermined position, opening 15 of outer can 10 is sealed.

Gasket 12 contains a polyamide resin, and preferably contains polyamide 66 (hereinafter, also referred to as PA66). PA66 has the advantage of excellent alkali resistance and being inexpensive. The polyamide resin is preferably contained as a main component of gasket 12.

At least a part of the polyamide resin is preferably recycled resin from a gasket waste material. The gasket waste material refers to a molded article (gasket 12) obtained in the molding step of gasket 12, unnecessary parts such as runners discharged during the molding step, used gasket 12, and the like. The recycled resin refers to a resin that is collected and reused by pulverizing these gasket waste materials.

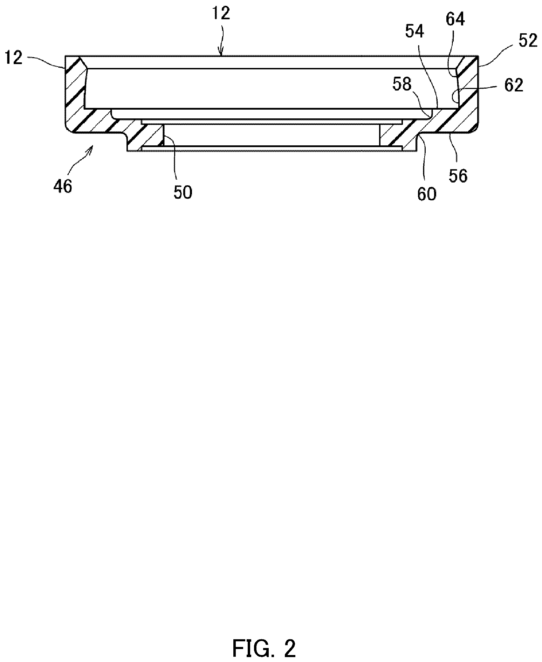

The shape of gasket 12 is, for example, annular as a whole. Specifically, as illustrated in FIG. 2, gasket 12 includes a disk-shaped proximal end wall 50 and side peripheral wall 52 that extends upward from the outer peripheral portion of proximal end wall 50.

Proximal end wall 50 includes lid plate receiving surface 54 (namely, a portion to be in contact with inner surface 14a of lid plate 14 of sealing body 11 and positioned on sealing body 11 side), and lower surface 56 (positioned on the electrode group 22 side opposite lid plate receiving surface 54). Step-shaped step portion 58 is provided at lid plate receiving surface 54 to match the shape of lid plate 14. Lower surface 56 is provided with engagement portion 60 that engages with peripheral wall 13 (which is bent during crimping) of outer can 10.

Side peripheral wall 52 includes outer peripheral edge contact portion 62 that contacts the outer peripheral edge of lid plate 14, and pressing portion 64 that covers outer surface 14b of lid plate 14 and presses down lid plate 14 when crimped.

As illustrated in FIG. 3, sealing body 11 is fitted between walls of side peripheral wall 52 of gasket 12. In this manner, combination body 46 of sealing body 11 and gasket 12 is formed.

The compression rate of gasket 12 at the time of crimping is preferably 10% or more. As long as the compression rate of gasket 12 is 10% or more, the airtightness and liquid tightness of outer can 10 are sufficiently maintained. The compression rate of gasket 12 is more preferably 30% or more. In the present embodiment, it has been confirmed that the airtightness and liquid tightness of outer can 10 are sufficiently maintained up to a compression rate of 60% for gasket 12.

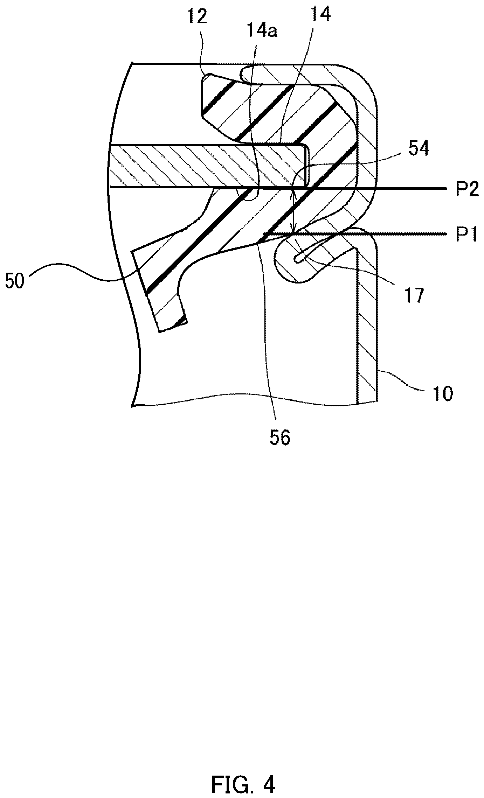

The compression rate of gasket 12 in the present embodiment will be described below with reference to FIG. 4.

FIG. 4 is a schematic enlarged view of the right-side portion of the crimped portion of outer can 10, showing its cross-sectional shape. In FIG. 4, the illustration of cap member 20 is omitted.

As illustrated in FIG. 4, the compression rate is defined as the percentage change in the length between portion P1 and portion P2 before and after compression. Herein, portion P1 is located at lower surface 56 of proximal end wall 50 of gasket 12 and is in contact with engaging protrusion portion 17 of outer can 10, and portion P2 is located at lid plate receiving surface 54 of proximal end wall 50 of gasket 12 and is in contact with inner surface 14a of lid plate 14. Specifically, when the length between P1 and P2 after compression is defined as A, and the length between P1 and P2 before compression is defined as B, the compression rate T is determined by the following equation I.

$$T\,[\%] = (B - A)/B \times 100 \,...\, \text{(Equation I)}$$

After the crimping, processing for reducing the outer diameter of the battery (outer diameter reduction processing) may be further performed. Even in that case, the above-described compression rate hardly changes regardless of presence or absence of outer diameter reduction processing or, even when the compression rate does change, the compression rate increases further due to the outer diameter reduction processing.

Gasket 12 may crack during crimping, and when a crack occurs in gasket 12, it can lead to poor sealing of outer can 10. Such a crack may occur even when crimping is performed at a typical compression rate of approximately 30%.

The inventors of the present application then have diligently studied the cause of cracking of gasket 12. In this study, the present inventors have found that there is a correlation between the weight average molecular weight of the polyamide resin included in gasket 12 and the occurrence rate of cracks in gasket 12. Specifically, the present inventors have found that a crack occurs in gasket 12 when the weight average molecular weight of the polyamide resin is less than 40,000.

In particular, when gasket 12 is obtained by recycling gasket waste material, it has been found that the weight average molecular weight of the polyamide resin decreases as the number of recycling cycles increases. Further, the present inventors have found that when the weight average molecular weight of the recycled polyamide resin is less than 40,000, a crack is more likely to occur in the gasket during crimping.

Based on the above findings, in the present embodiment, the weight average molecular weight of the polyamide resin is set to 40,000 or more. Although the mechanism by which the cracking of gasket 12 is suppressed by increasing the weight average molecular weight of the polyamide resin to 40,000 or more is not clear, it is presumed that the cracking of gasket 12 is suppressed because the toughness of gasket 12 is increased. The upper limit of the weight average molecular weight of the polyamide resin is not particularly limited as long as moldability is not impaired, and may be, for example, 60,000.

The weight average molecular weight of the polyamide resin may be measured using the gel permeation chromatography (GPC) method . Specifically, the weight average molecular weight may be measured by the following procedures.

1) A sample solution is prepared by dissolving a part of gasket 12 in an eluent, and the obtained sample solution is filtered through a membrane filter (pore size 0.2 $\mu$m) as a pretreatment for analysis. After filtration, the sample solution is caused to pass through a column in a GPC measurement apparatus. The molecular size of the sample solution eluted from the column is detected by a detector, and a chromatogram of the molecular size in the sample solution is obtained. The measurement conditions according to the GPC method may be as follows.

(Measurement Conditions)

GPC measurement apparatus: GPC-104 (using RI detector) manufactured by Shoko Scientific Co., Ltd.
Column: two connected columns Shodex GPC LF-404 columns manufactured by Showa Denko K.K.
Eluent: a solution including hexafluoroisopropanol (HFIP) with 10 mmol/L of sodium trifluoroacetate ($CF_3COONa$) added thereto
Sample concentration: 0.2 w/v%
Injection amount: 10 $\mu$L
Flow rate of the sample liquid in the column: 0.3 mL/min
Column temperature: 40°C

2) A similar measurement is performed by using a standard substance (poly(methyl methacrylate) (PMMA)) with a known molecular weight, and a calibration curve (detection time versus the logarithm of the molecular weight) is created.

3) Then, using the calibration curve obtained in procedure 2), the molecular weight at a certain detection time is identified from the chromatogram of the sample obtained in procedure 1). Thus, the weight average molecular weight of the polyamide resin contained in gasket 12 is measured.

The procedure for producing gasket 12 is as follows: first, a polyamide resin material is finely crushed into granular resin pellets to prepare the resin pellets. At this time, a polyamide resin with a weight average molecular weight of 40,000 or more is prepared. Alternatively, a polyamide resin with a weight average molecular weight of 55,000 or more may be prepared. The prepared resin pellets are fed into a cylinder through the hopper of an injection molding machine. The cylinder is heated by a heater, so that the resin pellets are melted inside the cylinder. The melted resin is kneaded by a screw rotating inside the cylinder. Subsequently, the screw is pushed toward the mold side, thereby injecting the melted resin into the mold. The resin is held in the mold until it cools and solidifies. Subsequently, the mold is opened, and the molded article is ejected. At this time, the molded article that is discharged is in a state where a plurality of gaskets are connected to a runner, and thus, gasket 12 is obtained by cutting the gaskets from the runner.

During the production of gasket 12 in this manner, when the prepared polyamide resin has a weight average molecular weight of 40,000 or more, gasket 12 in which cracking is prevented can be obtained.

Meanwhile, it is not preferable from the viewpoint of effective resource utilization to directly discard the runner remaining after removing gasket 12, as this also leads to an increase in environmental load. Accordingly, the remaining runner is pulverized again into resin pellets to be used as raw materials for gasket 12. Usually, this type of recycling is performed. However, as the number of recycling cycles increases, the weight average molecular weight of the polyamide resin decreases, and when the weight average molecular weight falls below 40,000, cracks are more likely to occur in the resulting gasket. Therefore, the weight average molecular weight of the polyamide resin may be used as a guide for the number of recycling cycles, as gasket 12 that is resistant to cracking can be obtained by recycling until the weight average molecular weight falls below 40,000.

That is, a method for producing a gasket for an alkaline battery according to one embodiment preferably includes a step of recycling a gasket waste material containing a polyamide resin with a weight average molecular weight of 40,000 or more and molding gasket 12.

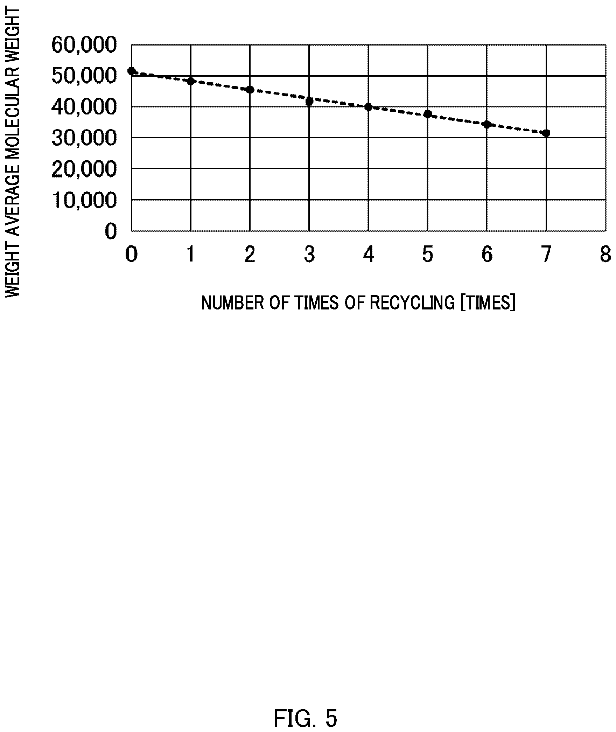

The method for a recycling gasket waste material containing polyamide resin with a weight average molecular weight of 40,000 or more is not particularly limited. For example, the weight average molecular weight of the polyamide resin in the gasket waste material discharged during the step of molding gasket 12 is measured, and when the weight average molecular weight is 40,000 or more, the gasket waste material may be collected and reused in the step of molding the gasket. Alternatively, in the step of molding the gasket, the gasket may be molded using gasket waste material that includes a polyamide resin with a weight average molecular weight of 40,000 or more, based on information indicating the relationship between the weight average molecular weight of the polyamide resin in the gasket waste material and the number of times of recycling (for example, a calibration curve as illustrated in FIG. 5 described below) acquired in advance. For example, based on the above information, the recycling of the gasket waste material may be repeated as long as the weight average molecular weight of the polyamide resin does not fall below 40,000.

As described above, according to the present embodiment, it is possible to suppress cracking of a gasket due to crimping by controlling the weight average molecular weight of a polyamide resin to be 40,000 or more. Therefore, according to the present embodiment, it is possible to obtain a high-quality battery with high sealing reliability, thereby improving the yield in battery production.

Examples

1. Battery Production

(Example 1)

(1) Production of Gasket

Pellets of polyamide 66 with a weight average molecular weight of approximately 50,000 were prepared as the polyamide resin. The prepared polyamide 66 pellets were loaded into the hopper of an injection molding machine and then fed from the hopper into the cylinder. The cylinder was heated to 300°C by a heater, and the polyamide 66 pellets were melted inside the cylinder. The melted polyamide 66 was kneaded by a screw rotating inside the cylinder. Subsequently, the screw was pushed toward the mold side, thereby injecting the melted resin into the mold. Subsequently, the resin was held in the mold until it cooled and solidified. Subsequently, the mold was opened, and the molded article was ejected. Since the discharged molded article is in a state where a plurality of gaskets are connected to the runner, gasket 12 was obtained by cutting it from the runner. Obtained gasket 12 had an annular shape as illustrated in FIG. 2.

Subsequently, obtained gasket 12 was kept in silica gel, dried, and stored in an absolutely dry state.

Here, a sample for measuring the weight average molecular weight was taken from a part of the obtained plurality of gaskets 12, and the weight average molecular weight was measured using the GPC method. Specifically, the sample was dissolved in an eluent to prepare a sample solution, and the obtained sample solution was filtered through a membrane filter (pore size 0.2 $\mu$m) as a pretreatment for analysis. The sample solution, after filtration, was caused to pass through a column of a GPC analysis apparatus. The molecular size of the sample solution eluting from the column was detected using a detector, and a chromatogram of the molecular size in the sample solution was obtained. A similar measurement was performed by using a standard substance with a known molecular weight, and a calibration curve (detection time versus the logarithm of the molecular weight) was created in advance. Then, using this calibration curve, the molecular weight at a certain detection time was identified from the sample's chromatogram. In this manner, the weight average molecular weight of gasket 12 was measured.

Conditions for the analysis according to the GPC method described above were as follows. The eluent was a solution obtained by adding 10 mmol/L of sodium trifluoroacetate ($CF_3COONa$) to hexafluoroisopropanol (HFIP). The standard substance was poly(methyl methacrylate) (PMMA). The sample concentration was 0.2 w/v%, the injection amount was 10 $\mu$L, the flow rate of the sample liquid in the column was 0.3 mL/min, the column temperature was 40°C, the GPC analysis apparatus was a GPC-104 (using RI detector) manufactured by Shoko Scientific Co., Ltd., and the column is composed of two connected Shodex GPC LF-404 columns, manufactured by Showa Denko K.K.

The weight average molecular weight of polyamide 66 that constitutes gasket 12 according to Example 1 was 52,000.

(2) Assembly of cylindrical Nickel-hydrogen secondary battery (AAA size)

First, as illustrated in FIG. 3, valve body 18 was accommodated inside cap member 20, and cap member 20 was welded onto outer surface 14b of lid plate 14. At this time, valve body 18 was disposed at a position to close central through-hole 16 of lid plate 14. In this manner, sealing body 11 was produced.

Next, sealing body 11 and gasket 12 obtained as described above were combined as illustrated in FIG. 3 to form combination body 46 of sealing body 11 and gasket 12.

Next, positive electrode 24 and negative electrode 26, which are used in a general AAA-size nickel-hydrogen secondary battery, were wound in a spiral shape with separator 28 made of polypropylene fiber nonwoven fabric interposed therebetween, thereby producing electrode group 22. Positive electrode current collector 36 and negative electrode current collector 38 were welded to electrode group 22 at predetermined positions.

Obtained electrode group 22 was accommodated in bottomed cylindrical outer can 10 suitable for AAA size. At this time, negative electrode current collector 38 was welded with bottom wall 35 of outer can 10. Furthermore, lead portion 44 of positive electrode current collector 36 was welded with inner surface 14a of lid plate 14. Subsequently, an alkaline electrolyte consisting of an aqueous sodium hydroxide solution was injected into outer can 10. Next, combination body 46 was fitted into the opening portion of outer can 10, and the peripheral wall of outer can 10 was appropriately bent to fix combination body 46 by crimping. The compression rate of gasket 12 during crimping was set to 60%.

Subsequently, the outer diameter reduction processing was performed on battery 2 whose sealing body 11 has been subjected to crimping and fixing. It has been confirmed that the above-described compression rate does not change even after the outer diameter reduction processing is performed. Thus, AAA-sized battery 2 was produced. By using the same procedure as described above, 20 batteries 2 were produced.

(Example 2)

A battery was produced in the same manner as in Example 1, except that pellets obtained by collecting and finely cutting the runners left over from the production of gaskets 12 in Example 1 were used as pellets of polyamide 66.

The weight average molecular weight of the polyamide 66 constituting the gasket in Example 2 was 49,000. The number of times of recycling of gasket 12 according to Example 2 has been counted as one.

(Example 3)

A battery was produced in the same manner as in Example 1, except that pellets obtained by collecting and finely cutting the runners left over from the production of gaskets 12 in Example 2 were used as pellets of polyamide 66.

The weight average molecular weight of polyamide 66 that constitutes gasket 12 according to Example 3 was 45,000. The number of times of recycling of gasket 12 according to Example 3 was counted as two.

(Example 4)

A battery was produced in the same manner as in Example 1, except that pellets obtained by collecting and finely cutting the runners left over from the production of gaskets 12 in Example 3 were used as pellets of polyamide 66.

The weight average molecular weight of polyamide 66 that constitutes gasket 12 according to Example 4 was 43,000. The number of times of recycling of gasket 12 according to Example 4 was counted as three.

(Example 5)

A battery was produced in the same manner as in Example 1, except that pellets obtained by collecting and finely cutting the runners left over from the production of gaskets 12 in Example 4 were used as pellets of polyamide 66.

The weight average molecular weight of polyamide 66 that constitutes gasket 12 according to Example 5 was 40,000. The number of times of recycling of gasket 12 according to Example 5 was counted as four.

(Comparative Example 1)

A battery was produced in the same manner as in Example 1, except that pellets obtained by collecting and finely cutting the runners left over from the production of gaskets 12 in Example 5 were used as pellets of polyamide 66.

The weight average molecular weight of polyamide 66 that constitutes gasket 12 according to Comparative Example 1 was 39,000. The number of times of recycling of gasket 12 according to Comparative Example 1 was counted as five.

(Comparative Example 2)

A battery was produced in the same manner as in Example 1, except that pellets obtained by collecting and finely cutting the runners left over from the production of gaskets 12 in Comparative Example 1 were used as pellets of polyamide 66.

The weight average molecular weight of polyamide 66 that constitutes gasket 12 according to Comparative Example 2 was 35,000. The number of times of recycling of gasket 12 according to Comparative Example 2 was counted as six.

(Comparative Example 3)

A battery was produced in the same manner as in Example 1, except that pellets obtained by collecting and finely cutting the runners left over from the production of gaskets 12 in Comparative Example 2 were used as pellets of polyamide 66.

The weight average molecular weight of polyamide 66 that constitutes gasket 12 according to Comparative Example 3 was 31,000. The number of times of recycling of gasket 12 according to Comparative Example 3 was counted as seven.

2. Evaluation

(1) Relationship between Number of Times of Recycling and Weight Average Molecular Weight

FIG. 5 is a graph that indicates the relationship between the number of times of recycling and the weight average molecular weights of polyamide 66 for the gaskets according to Examples 1 to 5 and Comparative Examples 1 to 3.

As is clear from the graph in FIG. 5, the weight average molecular weight of the polyamide 66 constituting the gasket decreases as the number of times of recycling increases.

(2) Inspection for Cracks in Gasket

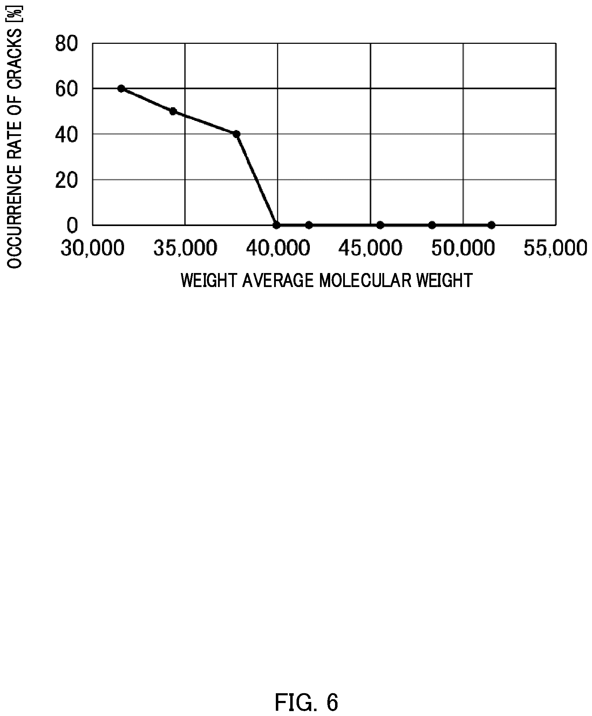

For the batteries according to Examples 1 to 5 and Comparative Examples 1 to 3, the condition of the gasket portion was observed, and the number of batteries in which cracking occurred was counted. Then, the percentage of batteries (out of a total of 20) in which a gasket crack occurred was calculated, and this percentage was defined as the occurrence rate of gasket cracks. FIG. 6 is a graph that indicates the relationship between the weight average molecular weight of polyamide 66 and the occurrence rate of gasket cracks from the obtained results.

(3) Consideration

FIG. 6 illustrates the relationship between the weight average molecular weight of polyamide 66 and the occurrence rate of gasket cracks. It can be seen that, when the weight average molecular weight of polyamide 66 is within the range of 52,000 to 40,000, no gasket crack due to crimping occurs, and high sealing quality is maintained. On the other hand, when the weight average molecular weight of polyamide 66 falls below 40,000, cracking of the gasket begins to occur. Accordingly, it can be said that when the weight average molecular weight of polyamide 66 is set to 40,000 or more, the occurrence of cracking in a gasket is prevented even when crimping is performed. Therefore, it is important to control the weight average molecular weight of polyamide 66 to be 40,000 or more in order to stably produce a high-quality battery.

Thus, according to the present invention, it is possible to provide a high-quality alkaline battery by controlling the weight average molecular weight of the polyamide resin included in the gasket to be 40,000 or more so as to prevent the gasket from cracking during crimping.

Furthermore, from FIG. 5 indicating the relationship between the number of times of recycling and the weight average molecular weight, it can be seen that the weight average molecular weight of polyamide 66 falls below 40,000 when the number of recycling cycles exceeds four. When the weight average molecular weight of polyamide 66 falls below 40,000, the quality of the battery deteriorates, and therefore, it is preferable to limit the number of recycling cycles to four or fewer to maintain the battery quality at a certain level or higher. That is, it is possible to easily understand a guide for balancing the number of recycling operations to reduce the environmental load and maintain the quality of the battery at or above a certain level.

The present invention is not limited to the embodiment and example described above, and various modifications are possible. For example, the type of battery is not limited to the nickel-hydrogen secondary battery and may be another alkaline secondary battery such as a nickel-cadmium secondary battery. Further, the battery is not limited to an alkaline secondary battery and may also be an alkaline primary battery. Further, the shape of the battery is not limited to a cylindrical shape; it may also be a prismatic battery.

This application is entitled to and claims the benefit of Japanese Patent Application No. 2022-051905 filed on March 28, 2022, the disclosure of which including the specification, drawings and abstract is incorporated herein by reference in its entirety.

Industrial Applicability

According to the present invention, it is possible to suppress cracking of a gasket caused by crimping, thereby providing a high-quality alkaline battery. Further, a method for producing a gasket for an alkaline battery can be provided.

Reference Signs List

    2 Nickel-hydrogen secondary battery
    10 Outer can
    11 Sealing body
    12 Gasket
    14 Lid plate
    18 Valve body
    20 Cap member (positive electrode terminal)
    24 Positive electrode
    26 Negative electrode
    28 Separator
    50 Proximal end wall
    52 Side peripheral wall

**Claims**

1. An alkaline battery comprising:

    an outer can that includes an opening at an upper end thereof;
    an electrode group that is accommodated in the outer can together with an alkaline electrolyte; and
    a sealing body that is crimped and fixed to the opening of the outer can via a gasket, wherein the gasket includes a polyamide resin having a weight average molecular weight of 40,000 or more.

2. The alkaline battery according to claim 1, wherein:

the sealing body includes a lid plate having a shape of a disk and closing the opening of the outer can, the lid plate including an inner surface that is positioned inside the outer can and an outer surface that is positioned outside the outer can;

the gasket includes a proximal end wall and a side peripheral wall, the gasket having an annular shape such that an outer peripheral edge of the lid plate is fitted into the gasket, the proximal end wall being in contact with the inner surface of the lid plate, the side peripheral wall extending upward from an outer peripheral portion of the proximal end wall and being bent at a portion corresponding to the outer peripheral edge of the lid plate to contact the outer surface of the lid plate; and

a portion of a side wall of the outer can is bent, and the lid plate is sandwiched by the bent portion via the proximal end wall and the side peripheral wall of the gasket, the portion being located between the opening and the electrode group.

3. The alkaline battery according to claim 2, wherein:

the lid further includes a through-hole; and
the sealing body further includes a valve body disposed on the outer surface of the lid plate so as to close the through-hole.

4. The alkaline battery according to claim 3, wherein a compression rate at the proximal end wall of the gasket in a direction along a thickness direction of the lid plate is 30% or more.

5. The alkaline battery according to any one of claims 1 to 4, wherein
the polyamide resin is polyamide 66.

6. The alkaline battery according to any one of claims 1 to 4, wherein
at least a part of the polyamide resin is a recycled resin from a gasket waste material.

7. A method for producing a gasket for an alkaline battery, the method comprising:
forming the gasket through recycling a gasket waste material that includes a polyamide resin having a weight average molecular weight of 40,000 or more.

8. The method according to claim 7, wherein:

information indicating a relationship between the weight average molecular weight of the polyamide resin included in the gasket waste material and the number of times of the recycling is acquired in advance; and

in the forming the gasket, based on the information, the gasket waste material with a weight average molecular weight of the polyamide resin of 40,000 or more is used.

FIG. 1

FIG. 2

FIG. 3

FIG. 4

FIG. 5

FIG. 6

<table>
<tr><td colspan="2" align="center">**INTERNATIONAL SEARCH REPORT**</td><td>International application No.<br><br>**PCT/JP2023/003334**</td></tr>
</table>

| A. | CLASSIFICATION OF SUBJECT MATTER |
|---|---|
| | *H01M 50/193*(2021.01)i; *H01M 50/152*(2021.01)i; *H01M 50/167*(2021.01)i<br>FI:  H01M50/193; H01M50/152; H01M50/167 |

According to International Patent Classification (IPC) or to both national classification and IPC

| B. | FIELDS SEARCHED |
|---|---|

Minimum documentation searched (classification system followed by classification symbols)

H01M50/193; H01M50/152; H01M50/167

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X<br><br><br>Y | JP 2002-533905 A (EVEREDY BATTERY COMPANY, INC.) 08 October 2002 (2002-10-08)<br>  paragraphs [0001], [0011]-[0013], [0028], fig. 1 | 1-2, 5-6<br><br><br>3-4, 7-8 |
| Y | JP 2005-347130 A (YUASA CORP) 15 December 2005 (2005-12-15)<br>  paragraph [0012] | 3-4 |
| Y | JP 2006-216358 A (MATSUSHITA ELECTRIC IND CO LTD) 17 August 2006 (2006-08-17)<br>  paragraph [0008] | 4 |
| Y | JP 2010-232071 A (PANASONIC CORP) 14 October 2010 (2010-10-14)<br>  paragraph [0079] | 7-8 |
| Y | JP 2015-026477 A (SHINSEI KAGAKU KOGYO CO LTD) 05 February 2015 (2015-02-05)<br>  paragraph [0031] | 7-8 |
| A | JP 56-032669 A (HITACHI MAXELL) 02 April 1981 (1981-04-02) | 1-8 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 April 2023** | **25 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/003334**

**C. DOCUMENTS CONSIDERED TO BE RELEVANT**

| Category* | Citation of document, with indication, where appropriate, of the relevant passages | Relevant to claim No. |
|---|---|---|
| A | WO 2016/038793 A1 (PANASONIC INTELLECTUAL PROPERTY MANAGEMENT CO., LTD.) 17 March 2016 (2016-03-17) | 1-8 |

Form PCT/ISA/210 (second sheet) (January 2015)

**INTERNATIONAL SEARCH REPORT**
Information on patent family members

International application No.

**PCT/JP2023/003334**

| Patent document cited in search report | | | Publication date (day/month/year) | Patent family member(s) | | | Publication date (day/month/year) |
|---|---|---|---|---|---|---|---|
| JP | 2002-533905 | A | 08 October 2002 | US | 2001/0014419 | A1 | |
| | | | | paragraphs [0001]-[0002], [0015]-[0016], table 1, fig. 1 | | | |
| | | | | WO | 2000/039863 | A1 | |
| | | | | EP | 1145344 | A1 | |
| | | | | DE | 69915366 | T2 | |
| | | | | AU | 2204700 | A | |
| | | | | CA | 2356973 | A1 | |
| | | | | AT | 261190 | T | |
| | | | | HK | 1040831 | A1 | |
| | | | | CN | 1338123 | A | |
| JP | 2005-347130 | A | 15 December 2005 | (Family: none) | | | |
| JP | 2006-216358 | A | 17 August 2006 | (Family: none) | | | |
| JP | 2010-232071 | A | 14 October 2010 | US | 2010/0248019 | A1 | |
| | | | | paragraph [0080] | | | |
| JP | 2015-026477 | A | 05 February 2015 | (Family: none) | | | |
| JP | 56-032669 | A | 02 April 1981 | (Family: none) | | | |
| WO | 2016/038793 | A1 | 17 March 2016 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H5226001 A

- JP 2022051905 A